# EUROPÄISCHE PATENTSCHRIFT

(11) **EP 1 275 861 B1**
(45) Veröffentlichungstag und Bekanntmachung des Hinweises auf die Patenterteilung: **08.03.2006**
(21) Anmeldenummer: 02011234.8
(22) Anmeldetag: 22.05.2002
(51) Int. Cl.: F16B 25/10, F16B 13/14

(54) **Schraube, insbesondere Betonschraube, und deren Verwendung**
Screw, in particular concrete screw, and its use
Vis, notamment vis pour l'ancrage dans du béton, et son utilisation

(30) Priorität: 23.06.2001 DE 10130462
(43) Veröffentlichungstag der Anmeldung: 15.01.2003
(73) Patentinhaber: TOGE-Dübel A. Gerhard KG, 90431 Nürnberg (DE)
(72) Erfinder: Gerhard, Anton, 90427 Nürnberg (DE)
(74) Vertreter: Rau, Manfred

(56) Entgegenhaltungen:
- DE-A- 19 957 112

## Beschreibung

Die Erfindung betrifft eine Schraube, insbesondere eine Schraube zum Einschrauben in eine Bohrloch-Wand eines Bohrlochs in einem harten, porösen Werkstoff, vorzugsweise Beton, gemäß dem Oberbegriff des Anspruches 1 und deren Verwendung.

Aus der EP 0 955 476 A ist eine selbstschneidende Betonschraube bekannt, die in eine Bohrloch-Wand eines Bohrlochs eingeschraubt wird, wobei der Raum zwischen dem Kern der Schraube und der Bohrloch-Wand durch Mörtel gefüllt ist. Durch die Vermörtelung wird die projizierte Hinterschnittfläche vergrößert, wodurch die Tragfähigkeit der Schraube erhöht wird. Da es sich bei dem die Schraube umgebenden Mörtel um einen harten, porösen Werkstoff handelt, ist eine Korrosion durch eintretende Feuchtigkeit möglich. Folglich wird die Tragfähigkeit der Schraube bei längerem Einsatz erheblich reduziert. Durch eine Beschädigung der Oberfläche der Schraube beim Eindrehen in die Bohrloch-Wand wird die Korrosion zusätzlich verstärkt.

Des weiteren ist es z. B. aus der gattungsbildenden DE 199 57 112 bekannt, selbstschneidende Schrauben in ein zumindest teilweise mit Klebstoff gefülltes Bohrloch in Beton einzuschrauben. Da im allgemeinen eine sorgfältige Reinigung des Bohrlochs von Bohrmehl auf Baustellen vernachlässigt wird, wird die Wirkung des Klebstoffs beeinträchtigt. Die erwünschte Verbesserung der Tragfähigkeit durch den Klebstoff wird nicht in dem beabsichtigten Maße erreicht.

Der Erfindung liegt die Aufgabe zugrunde, eine Schraube der gattungsgemäßen Art dahin weiterzubilden, daß sie eine erhöhte Tragfähigkeit in einem Bohrloch aufweist und besonders leicht einschraubbar ist.

Die Aufgabe wird durch den kennzeichnenden Teil des Anspruches 1 gelöst. Der Kern der Erfindung besteht darin, daß die Zähne in einem dem Einführende benachbarten Abschnitt angeordnet sind und gegenüber dem Gewinde eine geringere Höhe aufweisen. Durch diese Ausgestaltung wird erreicht, daß die Zähne an der Bohrloch-Wand eines Bohrlochs mit Nenndurchmesser schaben, wodurch die Bohrloch-Wand beim Eindrehen der Schraube von Bohrmehl gereinigt wird. Des weiteren wird das Einschrauben durch die Entfernung des Bohrmehls erleichtert.

Beim Eindrehen der Schraube in ein zumindest teilweise flüssigen Klebstoff aufweisendes Bohrloch gemäß Anspruch 12 wird in dem Abschnitt mit Zähnen das abgeschabte Bohrmehl gleichmäßig mit dem Klebstoff vermischt. Der Klebstoffwird durch das Eindrehen der Schraube verdrängt und durch den mit Zähnen versehenen Abschnitt gedrückt. Das in dem Klebstoff homogen verteilte Bohrmehl wirkt dabei als Füllstoff.

Der Vorteil der Verwendung eines Zwei-Komponenten-Klebstoffes mit einer flüssigen Komponente und einer Komponente in Mikro-Verkapselung gemäß Anspruch 13 besteht darin, daß durch die Zähne die Mikro-Verkapselung aufgerissen wird, wodurch die beiden Komponenten des Klebstoffs vermischt werden. Durch diese Ausgestaltung der Schraube wird eine sichere und einfache Verklebung der Schraube in dem Bohrloch erzielt. Eine Korrosion der Schraube aufgrund von Feuchtigkeitszutritt ist wegen des luftdichten Verschlusses mit Klebstoff nicht möglich.

Weitere vorteilhafte Ausgestaltungen geben die Unteransprüche an.

Nachfolgend wird die Erfindung anhand eines bevorzugten Ausführungsbeispiels in Verbindung mit der Zeichnung näher erläutert. Dabei zeigen:
- Fig. 1: eine Draufsicht auf eine in eine Bohrloch-Wand eines Bohrlochs eingeschraubte Schraube,
- Fig. 2: eine Ansicht gemäß der Schnittlinie II-II in Fig. 1,
- Fig. 3: eine vergrößerte Darstellung des in Fig. 1 eingekreisten Bereichs,
- Fig. 4: eine Ansicht gemäß der Schnittlinie IV-IV in Fig. 3 und
- Fig. 5: eine Ansicht gemäß der Schnittlinie V-V in Fig. 3.

Eine selbstschneidende Schraube 1, bei der es sich um eine Betonschraube handelt, weist einen im wesentlichen zylindrischen Kern 2 mit einem Einführende 3, einer Einschraub-Längsrichtung 4, einem Außenumfang 5 und einer Mittel-Längs-Achse 6 auf. An dem dem Einführende 3 abgewandten Ende des Kerns 2 ist ein beliebig auszubildender Schraubenkopf 7 vorgesehen. Im Bereich des Einführendes 3 ist der Kern 2 abgefast.

Einstückig mit dem Kern 2 ist ein Gewinde 8 ausgebildet, das vom Einführende 3 her entgegen der Einschraub-Längsrichtung 4 entlang eines Schneid-Abschnitts 9 ein Schneid-Gewinde 10 mit Schneidelementen 11 und entlang eines Gewindeabschnitts 12 ein sich daran anschließendes normales Gewinde 13 aufweist. Das Gewinde 8 weist eine Teilung T und eine Höhe G seines Gewinde-Steges 14 gegenüber dem Außenumfang 5 des Kerns 2 auf. Die nähere Ausgestaltung einer derartigen Schraube 1 ist in der DE 198 56 512.7 beschrieben.

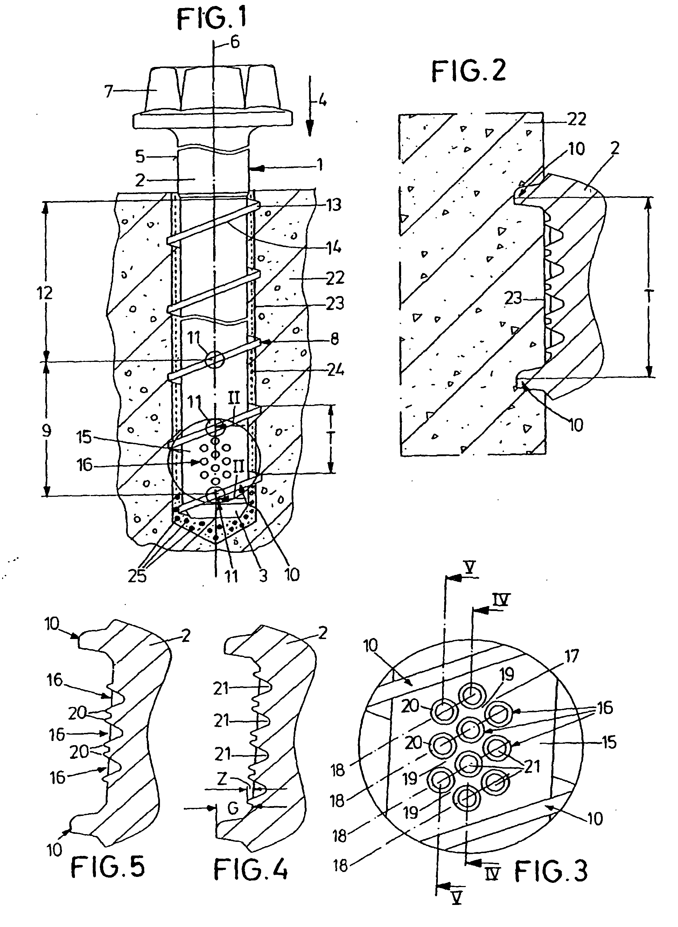

Der Kern 2 umfaßt des weiteren in einem dem Einführende 3 benachbarten Abschnitt 15 Zähne 16, die gegenüber dem Außenumfang 5 des Kerns 2 eine Höhe Z aufweisen. Der Abschnitt 15 erstreckt sich dabei über eine Teilung T des Gewindes 8. Die Höhe Z der Zähne 16 ist im Vergleich zu der Höhe G des Gewindes 8 erheblich kleiner, wobei für das Verhältnis der Höhen G und Z gilt: 0,1 ≤ Z/G ≤ 0,3. In absoluten Maßen weisen die Zähne 16 eine Höhe Z von 0,2 mm bis 0,6 mm auf, wobei die Höhe G des Gewinde-Steges 14 von 1,7 mm bis 2,0 mm reicht. Die Zähne 16 sind lediglich in dem Abschnitt 15 in einem Winkelbereich 17 des Außenumfangs 5 angeordnet, der sich höchstens über 45° des Außenumfangs 5 erstreckt. Die Zähne 16 sind, wie aus den Fig. 1 und 3 ersichtlich, in vier nahezu parallel zu dem Gewinde-Steg 14 verlaufenden Reihen 18 angeordnet. Die Reihen 18 der Zähne 16 sind voneinander beabstandet, wodurch Kanäle 19 gebildet sind. Ebenso weisen die Zähne 16 in einer Reihe 18 zueinander einen Abstand auf. Die Zähne 16 sind auch in Reihen angeordnet, die in der Einschraub-Längsrichtung 4 verlaufen. Die Zähne 16 sind einstückig mit dem Kern 2 ausgebildet und sind durch kraterförmige Erhöhungen 20 gebildet, d.h. sie weisen eine zentrale, im Querschnitt kreisförmige Vertiefung 21 auf. Die Vertiefungen 21 resultieren aus dem Eindrücken eines Dorns oder eines ähnlichen Gegenstands in den Kern 2, wodurch die die Zähne 16 bildenden, scharfkantigen Erhöhungen 20 entstehen.

Beim Eindrehen der Schraube 1 in eine Bohrloch-Wand 22 eines Bohrlochs 23 kommt zunächst das Schneid-Gewinde 10, das im Durchmesser größer ist als der Nenndurchmesser des Bohrlochs 23, in Eingriff mit der Bohrloch-Wand 22, wobei der Kern 2 einen Abstand von der Bohloch-Wand 22 hat, der in etwa der Höhe Z entspricht. Durch das Schneiden und Reiben des Schneid-Gewindes 10 entsteht ein Innengewinde in der Bohrloch-Wand 22. Die Zähne 16 reiben dabei an der Bohrloch-Wand 22, wodurch das Bohrmehl abgeschabt wird. Durch die Zähne 16 wird die Bohrloch-Wand 22 von Bohrmehl gereinigt. Das abgeschabte Bohrmehl wird dann vor dem Einführende 3 vorhergeschoben.

Bei einer Einbettung der Schraube 1 in das Bohrloch 23, das einen flüssigen Klebstoff 24 enthält, wird eine besonders hohe Tragfähigkeit erzielt, da das abgeschabte Bohrmehl gleichmäßig in dem Klebstoff 24 verteilt wird, der aufgrund des Eindrehens der Schraube durch den mit den Zähnen 16 versehenen Abschnitt 15 1 gedrückt wird. Durch das Vermischen des abgeschabten Bohrmehls mit einem üblichen Klebstoff24 wird eine höhere Belastbarkeit der Schraube 1 erzielt als bei einem Bohrloch, das Bohrmehl-Agglomerate in dem Klebstoff 24 aufweist. Des weiteren nimmt die gereinigte Bohrloch-Wand 22 den Klebstoff 24 besser auf.

Ferner ist die Schraube 1 vorgesehen, um in eine Bohrloch-Wand 22 eines Bohrlochs 23 eingeschraubt zu werden, das einen Zwei-Komponenten-Klebstoff 24 mit einer flüssigen Komponente und einer Komponente in Mikro-Verkapselung 25 umfaßt. Die Mikrokapseln 25 weisen einen Durchmesser von ungefähr 0,3 mm auf. Beim Eindrehen der Schraube 1 in das Bohrloch 23 werden die Mikrokapseln 25 zwischen den scharfkantigen Zähnen 16 und der Bohrloch-Wand 22 aufgerissen. Sämtliche Mikrokapseln 25 werden dabei von den Zähnen 16 erfaßt. Der Klebstoff 24 wird dabei durch die Kanäle 19 gepreßt und gleichmäßig in dem Bohrloch 23 verteilt.

Die Schraube 1 weist also sowohl bei der Verwendung von EinKomponenten- als auch bei der Verwendung von Zwei-Komponenten-Klebstoffen 24 die bereits genannten Vorteile auf. Auch bei dem Eindrehen der Schraube 1 in ein Bohrloch 23 ohne Klebstoff 24 werden erhebliche Verbesserungen erzielt.

## Patentansprüche

1. Schraube (1), insbesondere Schraube zum Einschrauben in eine Bohrloch-Wand (22) eines Bohrlochs (23) in einem harten, porösen Werkstoff, insbesondere Beton, umfassend
a) einen zylindrischen Kern (2) mit einem Einführende (3), einer Einschraub-Längsrichtung (4), einem Außenumfang (5) und einer Mittel-Längs-Achse (6),
b) ein einstückig mit dem Kern (2) ausgebildetes Gewinde (8) mit einer Teilung T und mit einer Höhe G seines Gewinde-Steges (14) gegenüber dem Außenumfang (5) des Kerns (2), welches ein sich vom Einführende (3) entgegen der Einschraub-Längsrichtung (4) über einen Schneid-Abschnitt (9) erstreckendes Schneid-Gewinde (10) mit Schneidelementen (11) aufweist, **dadurch gekennzeichnet, daß**
c) der Kern (2) in einem dem Einführende (3) benachbarten Abschnitt (15) Zähne (16) aufweist, die gegenüber dem Außenumfang (5) des Kerns (2) eine Höhe Z aufweisen, wobei für das Verhältnis der Höhen G und Z gilt: 0,1 ≤ Z/G ≤ 0,3.

2. Schraube (1) nach Anspruch 1, **dadurch gekennzeichnet,**
**daß** der mit den Zähnen (16) versehene Abschnitt (15) sich etwa über eine Teilung T erstreckt.

3. Schraube (1) nach Anspruch 1 oder 2, **dadurch gekennzeichnet,**
**daß** die Zähne (16) lediglich in einem Winkelbereich (17) des Außenumfangs (5) angeordnet sind, der sich über höchstens 45° des Außenumfangs (5) erstreckt.

4. Schraube (1) nach einem der Ansprüche 1 bis 3, **dadurch gekennzeichnet,**
**daß** die Zähne (16) einstückig mit dem Kern (2) ausgebildet sind.

5. Schraube (1) nach einem der Ansprüche 1 bis 4, **dadurch gekennzeichnet,**
**daß** die Zähne 16) durch kraterförmige Erhöhungen (20) gebildet sind.

6. Schraube (1) nach einem der Ansprüche 1 bis 5, **dadurch gekennzeichnet,**
**daß** die Zähne (16) in mehreren Reihen (18) angeordnet sind.

7. Schraube (1) nach Anspruch 6, **dadurch gekennzeichnet,**
**daß** die Reihen (18) nahezu parallel zum Gewinde-Steg (14) angeordnet sind.

8. Schraube (1) nach Anspruch 6 oder 7, **dadurch gekennzeichnet,**
**daß** die Reihen (18) unter Ausbildung von Kanälen (19) voneinander beabstandet angeordnet sind.

9. Schraube (1) nach einem der Ansprüche 1 bis 8, **dadurch gekennzeichnet,**
**daß** die Zähne (16) eine Höhe Z von 0,2 mm bis 0,6 mm aufweisen.

10. Schraube (1) nach einem der Ansprüche 1 bis 9, **dadurch gekennzeichnet,**
**daß** die Höhe G des Gewinde-Steges (14) von 1,7 mm bis 2,0 mm reicht.

11. Verwendung einer Schraube (1) nach einem der Ansprüche 1 bis 10, zum Einschrauben in eine Bohrloch-Wand (22) eines Bohrlochs (23) in einem harten porösen Werkstoff, insbesondere Beton, wobei die Zähne (16) von der Bohrloch-Wand (22) Bohrmehl abschaben.

12. Verwendung einer Schraube (1) nach einem der Ansprüche 1 bis 10 zum Einschrauben in eine Bohrloch-Wand (22) eines Bohrlochs (23) in einem harten, porösen Werkstoff, insbesondere Beton, wobei in dem Bohrloch (23) ein flüssiger Klebstoff (24) vorhanden ist.

13. Verwendung einer Schraube (1) nach einem der Ansprüche 1 bis 10 zum Einschrauben in eine Bohrloch-Wand (22) eines Bohrlochs (23) in einem harten porösen Werkstoff, insbesondere Beton, wobei in dem Bohrloch (23) ein Zwei-Komponenten-Klebstoff(24) mit einer flüssigen Komponente und einer Komponente in Mikro-Verkapselung (25) vorhanden ist und wobei die Zähne (16) die Mikro-Verkapselung (25) aufreißen.

## Claims

1. Bolt (1), in particular a bolt for screwing into a wall (22) of a hole (23) drilled in a hard, porous material, in particular concrete, comprising
a) a cylindrical body (2) with an insertion end (3), a screw-in longitudinal direction (4), an outer circumference (5) and a median longitudinal axis (6),
b) a thread (8) which is configured integrally with the body (2) and has a pitch T and a height G of its thread ridge (14) with respect to the external circumference (5) of the body (2), which thread (8) has a cutting thread (10) extending from the insertion end (3) counter to the screw-in longitudinal direction (4) over a cutting portion (9), and cutting elements (11), **characterised in that**
c) the body (2) has, in a portion (15) adjacent to the insertion end (3), teeth (16) which, with respect to the external circumference (5) of the body (2), have a height Z, the equation 0.1 ≤ Z/G ≤ 0.3 applying to the relationship between the heights G and Z.

2. Bolt (1) according to claim 1, **characterised in that** the portion (15) provided with the teeth (16) extends approximately over a pitch T.

3. Bolt (1) according to claim 1 or 2, **characterised in that** the teeth (16) are disposed only in an angular region (17) of the external circumference (5), which angular region (17) extends over at most 45° of the external circumference (5).

4. Bolt (1) according to any one of claims 1 to 3, **characterised in that** the teeth (16) are configured to be integral with the body (2).

5. Bolt (1) according to any one of claims 1 to 4, **characterised in that** the teeth (16) are formed by crater-like prominences (20).

6. Bolt (1) according to any one of claims 1 to 5, **characterised in that** the teeth (16) are disposed in a plurality of rows (18).

7. Bolt (1) according to claim 6, **characterised in that** the rows (18) are deposited almost parallel to the thread ridge (14).

8. Bolt (1) according to claim 6 or 7, **characterised in that** the rows (18) are spaced apart from each other and form channels (19).

9. Bolt (1) according to any one of claims 1 to 8, **characterised in that** the teeth (16) have a height Z of 0.2 mm to 0.6 mm.

10. Bolt (1) according to any one of claims 1 to 9, **characterised in that** the height G of the thread ridge (14) ranges from 1.7 mm to 2.0 mm.

11. Use of a bolt (1) according to any one of claims 1 to 10 for screwing into a wall (22) of a hole (23) drilled in a hard, porous material, in particular concrete, the teeth (16) scraping drilling dust from the wall (22) of the drilled hole.

12. Use of a bolt (1) according to any one of claims 1 to 10 for screwing into a wall (22) of a hole (23) drilled in a hard, porous material, in particular concrete, a liquid adhesive (24) being present in the drilled hole (23).

13. Use of a bolt (1) according to any one of claims 1 to 10 for screwing into a wall (22) of a hole (23) drilled in a hard, porous material, in particular concrete, a two-component adhesive (24) comprising a liquid component and a component in micro-encapsulation (25) being present in the drilled hole (23) and the teeth (16) tearing open the micro-encapsulation (25).

## Revendications

1. Vis (1), en particulier vis destinée au vissage dans une paroi de forure (22) d'une forure (23) dans un matériau dur et poreux, en particulier du béton, comprenant
a) une âme cylindrique (2) avec une introduction (3), un sens de vissage longitudinal (4), une périphérie extérieure (5) et un axe central longitudinal (6),
b) un filetage (8) réalisé d'une seule pièce avec l'âme (2) avec un pas T et avec une hauteur G de son filet (14) par rapport à la périphérie extérieure (5) de l'âme (2), laquelle présente un filetage de coupe (10) s'étendant depuis l'introduction (3) à l'encontre du sens de vissage longitudinal (4) sur une section de coupe (9) avec des éléments de coupe (11), **caractérisée en ce que**
c) l'âme (2) présente des dents (16) dans une section (15) adjacente à l'introduction (3), lesdites dents présentant une hauteur Z par rapport à la périphérie extérieure (5) de l'âme (2), où pour le rapport des hauteurs G et Z s'applique ce qui suit : 0,1 ≤ Z/G ≤ 0,3.

2. Vis (1) selon la revendication 1, **caractérisée en ce que** la section (15) munie des dents (16) s'étend à peu près sur un pas T.

3. Vis (1) selon la revendication 1 ou 2, **caractérisée en ce que** les dents (16) sont uniquement agencées dans une zone angulaire (17) de la périphérie extérieure (5), qui s'étend sur maximum 45° de la périphérie extérieure (5).

4. Vis (1) selon l'une quelconque des revendications 1 à 3, **caractérisée en ce que** les dents (16) sont réalisées d'une seule pièce avec l'âme (2).

5. Vis (1) selon l'une quelconque des revendications 1 à 4, **caractérisée en ce que** les dents (16) sont formées par des élévations en forme de cratère (20).

6. Vis (1) selon l'une quelconque des revendications 1 à 5, **caractérisée en ce que** les dents (16) sont agencées en plusieurs rangées (18).

7. Vis (1) selon la revendication 6, **caractérisée en ce que** les rangées (18) sont agencées à peu près parallèles au filet (14).

8. Vis (1) selon la revendication 6 ou 7, **caractérisée en ce que** les rangées (18) sont agencées espacées les unes des autres en formant des canaux (19).

9. Vis (1) selon l'une quelconque des revendications 1 à 8, **caractérisée en ce que** les dents (16) présentent une hauteur Z comprise entre 0,2 mm et 0,6 mm.

10. Vis (1) selon l'une quelconque des revendications 1 à 9, **caractérisée en ce que** la hauteur G du filet (14) s'élève entre 1,7 mm et 2,0 mm.

11. Utilisation d'une vis (1) selon l'une quelconque des revendications 1 à 10 en vue du vissage dans une paroi de forure (22) d'une forure (23) dans un matériau dur et poreux, en particulier du béton, où les dents (16) raclent les poussières de forage de la paroi de forure (22) .

12. Utilisation d'une vis (1) selon l'une quelconque des revendications 1 à 10 en vue du vissage dans une paroi de forure (22) d'une forure (23) dans un matériau dur et poreux, en particulier du béton, où une colle liquide (24) est disponible dans la forure (23).

13. Utilisation d'une vis (1) selon l'une quelconque des revendications 1 à 10 en vue du vissage dans une paroi de forure (22) d'une forure (23) dans un matériau dur et poreux, en particulier du béton, où une colle à deux composants (24) avec un composant liquide et un composant en microencapsulation (25) est disponible dans la forure (23) et où les dents (16) déchirent la microencapsulation (25) .
